# EUROPÄISCHE PATENTSCHRIFT

(11) **EP 2 907 646 B1**
(45) Veröffentlichungstag und Bekanntmachung des Hinweises auf die Patenterteilung: **15.11.2017**
(21) Anmeldenummer: 15154798.1
(22) Anmeldetag: 12.02.2015
(51) Int. Cl.: B29C 47/68, B29C 47/08

(54) **Grobpartikelabscheidevorrichtung**
Large particle separation device
Dispositif de séparation de particules grossières

(30) Priorität: 12.02.2014 DE 102014101776
(43) Veröffentlichungstag der Anmeldung: 19.08.2015
(73) Patentinhaber: Nordson PPS GmbH, 48157 Münster (DE)
(72) Erfinder: Middler, Robert, 48329 Havixbeck (DE)
(74) Vertreter: Eisenführ Speiser

(56) Entgegenhaltungen:
- WO-A1-00/54958
- WO-A1-01/54793
- WO-A1-97/26973
- WO-A1-98/24532
- CN-A- 103 072 251
- CN-A- 103 434 114
- CN-U- 202 846 864
- US-B1- 6 443 312

## Beschreibung

Die Erfindung betrifft eine Grobpartikelabscheidevorrichtung mit den Merkmalen des Oberbegriffs des Anspruchs 1.

Bei der Verarbeitung von hochviskosen Fluiden wie insbesondere von Kunststoffschmelzen müssen Agglomerate und Fremdkörper herausgefiltert werden, bevor das Fluid in nachgeschalteten Produktionsprozessen verwendet werden kann.

Bei gering verschmutzten Fluiden werden insbesondere Filtriervorrichtungen in Form sogenannter Bolzen-Siebwechsler verwendet. Das Fluid wird darin durch innerhalb der Siebbolzen angeordnete Filtermedien geleitet. Der abgesonderte Schmutz kann nach einiger Zeit durch schnelles Wechseln der Siebelemente oder auch durch Rückspülung entfernt werden. Bei stark verschmutzten Fluiden hingegen nimmt ein häufiger Siebwechsel oder ein häufiger Rückspülprozess zu viel Zeit in Anspruch. Außerdem wird im Falle einer sehr häufigen Rückspülung dem System zu viel Masse entzogen.

Bei stark verschmutzten Fluiden werden daher Grobpartikelabscheidevorrichtungen eingesetzt, wie sie beispielsweise aus der EP 1 697 018 B1 bekannt sind. Das Fluid wird von außen in eine Filtertrommel geleitet und fließt aus deren Innerem wieder ab. Grobe Partikel bleiben an der Außenseite der Filtertrommel hängen und werden mit einem Abstreiferelement abgeschabt. Die Filtertrommel ist in einem Gehäuse gelagert, so dass sich die Mantelfläche entlang des feststehenden Abstreiferelements bewegt. Das Dokument WO 01/54793 A1 beschreibt eine weitere Filtriervorrichtung für hochviskose Fluide.

Bekannt ist auch, beispielsweise aus der WO 2006/045126 A1, die Fließrichtung umzukehren und das verschmutzte Fluid von innen in eine Filtertrommel einzuleiten. Das Abstreiferelement ist dann ebenfalls im Inneren der Filtertrommel angeordnet. Nachteilig hieran ist, dass die vom Mantel der Filtertrommel abgeschabten Schmutzpartikel im Inneren des Aufnahmeraums verbleiben und damit immer wieder gegen den Mantel der Filtertrommel gedrückt werden. Mit zunehmender Betriebsdauer sammelt sich eine große Menge von Agglomeraten oder Schmutzpartikeln an, die entweder nur nach Öffnen des Gehäuses entfernt werden können, was einen hohen Zeitaufwand nach sich zieht und eine lange Unterbrechung des Produktionsbetriebs bedeutet, oder die Schmutzpartikel müssen durch an sich bekannte Rückspüleinrichtungen aus dem Aufnahmeraum herausgeschwemmt werden, wobei einerseits viel Masse an Fluid verloren geht und andererseits bei vielen Anwendungen der Druck nicht ausreicht, um eine effektive Rückspülung bewirken zu können, so dass eine zusätzliche Einrichtung zur Druckerhöhung vorgesehen sein muss.

Die Aufgabe der vorliegenden Erfindung liegt somit darin, vom Mantel der Filtertrommel entfernte Schmutzpartikel schnell und effektiv aus dem Inneren des Aufnahmeraums aus dem Gehäuse ableiten zu können.

Diese Aufgabe wird durch eine Grobpartikelabscheidevorrichtung mit den Merkmalen des Anspruchs 1 gelöst.

Die eigentliche Reinigung der Filtertrommel erfolgt nach wie vor an der Innenseite des Mantels der Filtertrommel durch das axial verschiebbare Abstreiferelement. Das Abstreiferelement ist dabei in seiner Außenkontur an die Innenkontur der Filtertrommel angepasst. Wird beispielsweise eine zylindrische Filtertrommel verwendet, so ist auch das Abstreiferelement an der an seinem Außenumfang angeordneten Abstreiferklinge kreisrund ausgebildet. Das Abstreiferelement wird über eine Kolbenstange alternierend in axialer Richtung hin-und her bewegt, wobei die Abstreiferklinge ständig über die innere Oberfläche der Filtertrommel schabt, dort anhaftende Schmutzpartikel ablöst und in die Außenbereiche des Aufnahmeraums schiebt.

Um nun das Ausschleusen der Schmutzpartikel aus dem Aufnahmeraum zu bewirken, wird das Abstreiferelement in eine axiale Endstellung verschoben. Dabei gelangt es in axialer Richtung über diejenigen Flächenbereiche der Filtertrommel hinaus, welche Filteröffnungen enthalten, so dass nun eine Abdichtung zwischen der Abstreiferklinge und dem Innenumfang der Filtertrommel bewirkt werden kann. In Verlängerung der eigentlichen Filtertrommel kann auch mindestens ein fluchtender Absatz im Gehäuse ausgebildet sein, so dass die Abstreiferklinge dann an diesen Absätzen gegenüber der Gehäusebohrung abdichtet.

Zugleich findet ab einer solchen axialen Zwischenstellung des Abstreiferelements eine Abdichtung auch am Innenumfang statt: An der Stirnseite des Aufnahmeraums ist dazu ein Deckelelement angeordnet, das eine innere Dichtzone besitzt, die mit einer Dichtzone am Abstreiferelement koppelbar ist. Beispielsweise besitzt das Deckelelement einen vorspringenden Ringbereich, der sich in Richtung des Aufnahmeraums erstreckt. Innerhalb des Ringbereichs ist bei den bevorzugten Ausführungsformen eine vertiefte Aufnahmeausnehmung vorgesehen, in die ein Absatz des Abstreiferelements eintauchen kann, so dass zwischen dem Außenumfang des Absatzes und dem Innenumfang der Aufnahmeausnehmung eine fluiddichte Abdichtung erfolgen kann.

Dichtzonen sind also Bereiche, an denen die Teile in der jeweiligen Stellung so eng voreinander stehen oder aneinander vorbei gleiten, dass hoch viskose Medien nicht durch diese Passung hindurch treten können.

Ist das Abstreiferelement in der beschriebenen Endstellung und ist auch am Innenumfang eine Abdichtung erfolgt, so wird eine äußere Ringkammer ausgebildet. Diese ist vom übrigen Teil des Aufnahmeraums abgetrennt, und es kann kein Fluid mehr aus dem Aufnahmeraum dorthin nachfließen. Die äußere Ringkammer geht in einen Schmutzablasskanal über, der aus dem Gehäuse heraus führt.

Der Schmutzablaufkanal ist beispielsweise über ein Ventil verschließbar. Wird das Ventil geöffnet, so kann Schmutz über einen axialen Hub des Abstreiferelements in eine axiale Endstellung aus der äußeren Ringkammer in den Schmutzablaufkanal gedrückt werden. Je nach Dimensionierung der äußeren Ringkammer, der Länge des axialen Hubs des Abstreiferelements von der Zwischenstellung in die Endstellung und der Dimensionierung des Schmutzablaufkanals kann entweder verschmutzte Masse schon mit einem einzelnen Hub herausgedrückt werden, oder es sind mehrere Hübe notwendig, um den Schmutz vollständig aus der äußeren Ringkammer zu entfernen. Dazu muss das Abstreiferelement lediglich wieder über die Zwischenstellung hinaus in den Aufnahmeraum hineingezogen werden, so dass die temporäre Abdichtung am Innenumfang wieder aufgehoben wird und wieder Fluid aus dem Aufnahmeraum in den Ringkanal nachfließen kann.

Das Abstreiferelement ist in dem Umfangsbereich zwischen dem Kolben und der Außenkante des vorspringenden Absatzes, welcher die Abdichtung gegenüber dem Deckelelement bewirkt, in axialer Richtung für das Fluid durchlässig ausgebildet, so dass Saugeffekte bei der Rückzugsbewegung das Abstreiferelement vermieden werden.

Die erfindungsgemäße Grobpartikelabscheidevorrichtung ermöglicht eine effektive Reinigung an einer großen Filterfläche und ermöglicht einen lang anhaltenden, ununterbrochenen Produktionsbetrieb, weil für den erfindungsgemäß ermöglichten Ausschleusungsvorgang für Schmutzpartikel, die sich in den Endbereichen vor dem Abstreiferelement sammeln, die Produktion nicht angehalten zu werden braucht. Der Produktionsbetrieb, also die kontinuierliche Filterung des Fluids mittels der halb durchlässigen Filtertrommel, kann während des Schmutzausschleusungsvorgangs ungehindert weitergehen.

Die effektive Filterfläche kann vergrößert werden, indem mehrere Filtertrommeln in den Aufnahmeraum eingesetzt werden, die fluchtend hintereinander angeordnet sind, so dass sie von einem einzigen Abstreiferelement gereinigt werden können.

Bei der alternierenden Bewegung des Abstreiferelements sammelt sich an beiden Seiten verschmutzte Masse an, so dass eine bevorzugte Ausführungsform der Erfindung vorsieht, die beschriebene Anordnung mit dem Deckelelement und dem Schmutzablasskanal sowie der in der Endstellung des Abstreiferelements ausbildbaren Ringkammer an beiden Stirnseiten des Aufnahmeraums in spiegelsymmetrischer Anordnung vorzusehen.

Gemäß einer bevorzugten Ausführungsform ist das Abstreiferelement an einer Kolbenstange angeordnet, welche an beiden gegenüberliegenden Stirnseiten des Aufnahmeraums im Gehäuse gelagert ist. Neben einer Erhöhung der mechanischen Stabilität und einer Präzisierung der Führung, insbesondere für die Führung des vorspringenden Absatzes am Abstreiferelement gegenüber der Aufnahmeausnehmung im Deckelelement, liegt ein wesentlicher Vorteil dieser Ausführungsform darin, dass das von Fluid frei durchfließbare Volumen innerhalb des Aufnahmeraums zu jeder Zeit und bei jeder Stellung des Abstreiferelements konstant ist.

Das Abstreiferelement kann jedoch auch am Ende einer Kolbenstange angeordnet sein, die nur einseitig im Gehäuse gelagert ist. Damit wird die Bauweise vereinfacht, weil nur an der ohnehin mit einem Antrieb gekoppelten Seite der Kolbenstange eine Durchführung und Abdichtung im Gehäuse vorgesehen sein muss, während eine Lagerung und Abdichtung an der gegenüberliegenden Seite vollständig eingespart werden kann. Dann allerdings ist in dem Teil des Aufnahmeraums, in den das Abstreiferelement hineingeschoben wird, zunächst ein größeres Volumen vorhanden, das mit zunehmendem Vorschub des Abstreiferelement in seine axiale Endstellung reduziert wird. Es ergibt sich somit beim Vorrücken des Abstreiferelements ein Pumpeffekt, über welchen sich eine pulsierende Strömung am Abflusskanal einstellt.

Bei weiteren bevorzugten Ausführungsformen einer erfindungsgemäßen Grobpartikelabscheidevorrichtung ist vorgesehen, dass das Deckelelement axial verschiebbar ist und mittels des vorgeschobenen Abstreiferelements aus seinem Dichtsitz am Gehäuse ausgerückt werden kann. Die Ringkammer, die das komprimierte Gemisch aus Schmelze und Schmutz enthält, wird somit zur Außenseite des Gehäuses hin geöffnet. Der Schmutz kann nach außen abfließen.

Bei diesen Ausführungsformen kann einerseits nur eine axiale Bewegung des Deckelements vorgesehen sein. Dann ist es vorteilhaft, das Deckelelement nach außen konisch zulaufend zu gestalten, so dass sich der als Schmutzablasskanal dienende Spalt zwischen Deckelelement und Gehäuse nach außen hin kontinuierlich erweitert und eine Verstopfung des Schmutzablasskanals dadurch erschwert wird.

Besonders bevorzugt ist vorgesehen, das Deckelement nicht nur verschiebbar, sondern auch rotierbar zu machen und an seinem Außenumfang mit einem Gewindegang zu versehen, so dass sich ein schneckenwendelförmiger Schmutzablasskanal ergibt. Wird das Deckelelement rotiert, kann in dem Schmutzablasskanal vorhandener Schmutz gezielt nach außen abgefördert werden.

Die Erfindung wird nachfolgend anhand der in den Zeichnungen dargestellten Ausführungsbeispiele näher erläutert. Die Figuren zeigen jeweils in einem Schnitt entlang der Längsachse:
- Fig. 1: eine Grobpartikelabscheidevorrichtung gemäß einer ersten Ausführungsform in Produktionsstellung; in einer Schnittansicht durch die Ebene der Zu- und Ablaufkanäle;
- Fig.2a - 2c: die Grobpartikelabscheidevorrichtung in verschiedenen Phasen einer Reinigung, in einer um 90° gegenüber Figur 1 gedrehten Schnittebene;
- Fig. 3: eine Grobpartikelabscheidevorrichtung gemäß einer zweiten Ausführungsform;
- Fig. 4: eine Grobpartikelabscheidevorrichtung gemäß einer dritten Ausführungsform;
- Fig. 5a bis 5d: Teile der Grobpartikelabscheidevorrichtung nach Figur 4 in verschiedenen Stellungen;
- Fig. 6: eine Grobpartikelabscheidevorrichtung gemäß einer dritten Ausführungsform; und
- Fig. 7a, 7b: einen Ausschnitt der Grobpartikelabscheidevorrichtung nach Figur 6 in verschiedenen Stellungen.

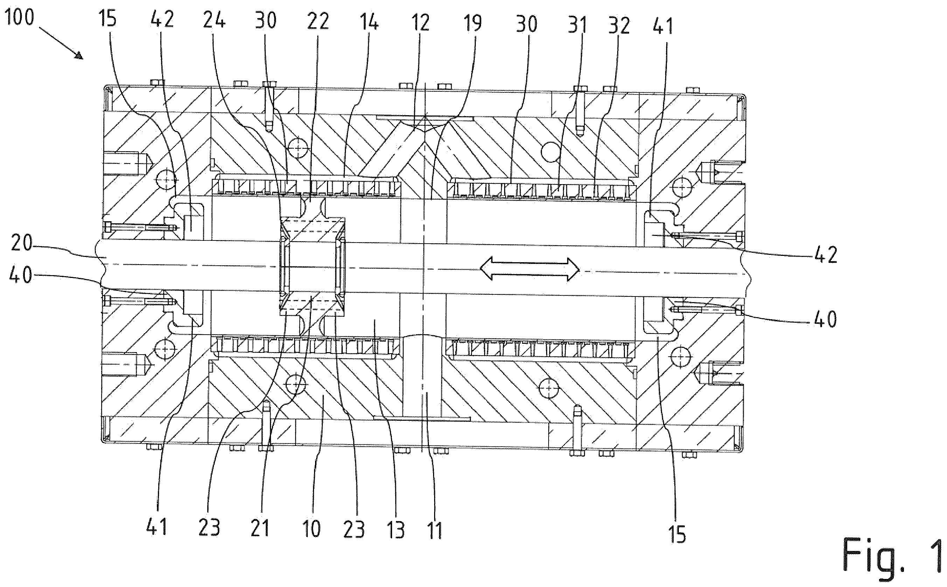

Figur 1 zeigt einen Längsschnitt durch eine erfindungsgemäß ausgebildete Grobpartikelabscheidevorrichtung 100, wobei davon nur ein Gehäuse 10 mit den innen liegenden Einrichtungen, jedoch ohne außen angesetzte Anbauteile wie Ventile und Antriebe gezeigt ist.

Das Gehäuse 10 ist schichtweise aus mehreren, hier nicht näher beschriebenen Einzelteilen zusammengesetzt. In einem Mittelteil ist ein Aufnahmeraum 13 ausgebildet, in welchen zwei Filtertrommeln 30 eingesetzt sind. Ein Zulaufkanal 11 mündet in dem Aufnahmeraum 13. Die Filtertrommeln 30 sind im dargestellten Ausführungsbeispiel zylindrisch ausgebildet und besitzen an ihrem Mantel 31 jeweils eine Vielzahl von Filteröffnungen 32, durch welche das Fluid in einen Außenraum 14 fließen kann, welcher die Filtertrommel 30 jeweils umgibt. Der jeweilige Außenraum 14 steht mit einem Ablaufkanal 12 in Verbindung, durch welchen das Fluid aus dem Gehäuse 10 heraus abfließen kann.

Zur linken Stirnseite des Aufnahmeraums 13 hin enden diejenigen Bereiche im Mantel 31 der Filtertrommel 30, die mit Filteröffnungen 32 versehen sind. Der Mantel der Filtertrommel 30 geht dort übergangslos in einen Absatz im Gehäuse 10 über, welcher einen Ringkanal 15 umschließt. Zwischen den beiden Filtertrommeln 30 ist ein Absatz 19 im Gehäuse 10 vorgesehen, der sich ebenfalls übergangslos an den Innenumfang des Mantels 31 der Filtertrommel 30 anschließt.

An der Stirnseite des Aufnahmeraums 13 ist im Zentrum, durch das die Mittelachse führt, ein Deckelelement 40 angeordnet, das sich mit einem Ringbereich 41 zum Aufnahmeraum 13 'hin erstreckt. Der Ringbereich 41 begrenzt den außen liegenden Ringkanal 15 und definiert bei dem hier gezeigten Ausführungsbeispiel zugleich eine innere Aufnahmeausnehmung 42.

An der gegenüberliegenden, in Figur 1 rechten Seite des Gehäuses 10 ist in spiegelsymmetrischer Weise eine gleiche Anordnung mit einem weiteren Ringkanal 15 und einem weiteren Deckelelement 40 vorgesehen.

Ein Abstreiferelement 20 ist an einer Kolbenstange 21 befestigt, welche durch beide Deckelelemente 40 an den gegenüberliegenden Enden des Gehäuses 10 hindurch verläuft und axial verschiebbar gelagert ist. Das Abstreiferelement 20 besitzt in der Mitte eine Abstreiferklinge 22, die sich bis an den jeweiligen Mantel der Filtertrommeln 31 erstreckt. Beidseits davon springt jeweils ein Absatz 23 vor, der auf die Aufnahmeausnehmungen 42 in den Deckelelementen 40 gerichtet ist. Wie durch die gestrichelten Linien angedeutet, besitzt das Abstreiferelement 20 mehrere axiale Durchbrüche, um bei der alternierenden Reinigungsbewegung von dem rechten in den linken Teil des Aufnahmeraums 13 und wieder zurück das Fluid ungehindert passieren lassen zu können.

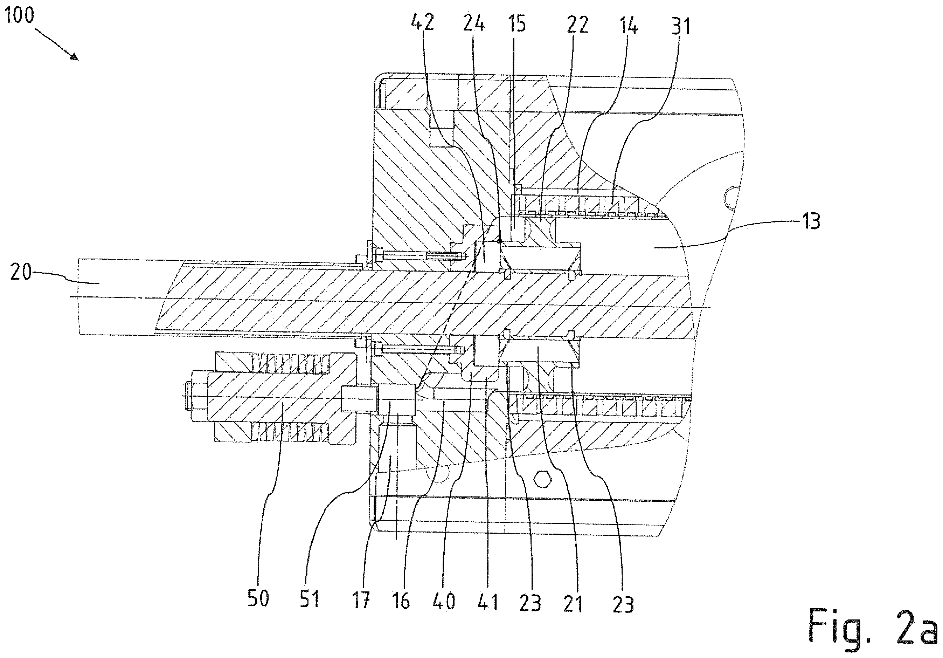

Die in Figur 2a gezeigte Stellung des Abstreiferelements 20 markiert einen Übergang zwischen dem normalen Reinigungsbetrieb, bei dem über das Abstreiferelement 20 ständig Schmutz von der Innenwand der Filtertrommel 30 abgeschabt wird, und der sich anschließenden erfindungsgemäßen Ausschleusung der abgeschabten Partikel.

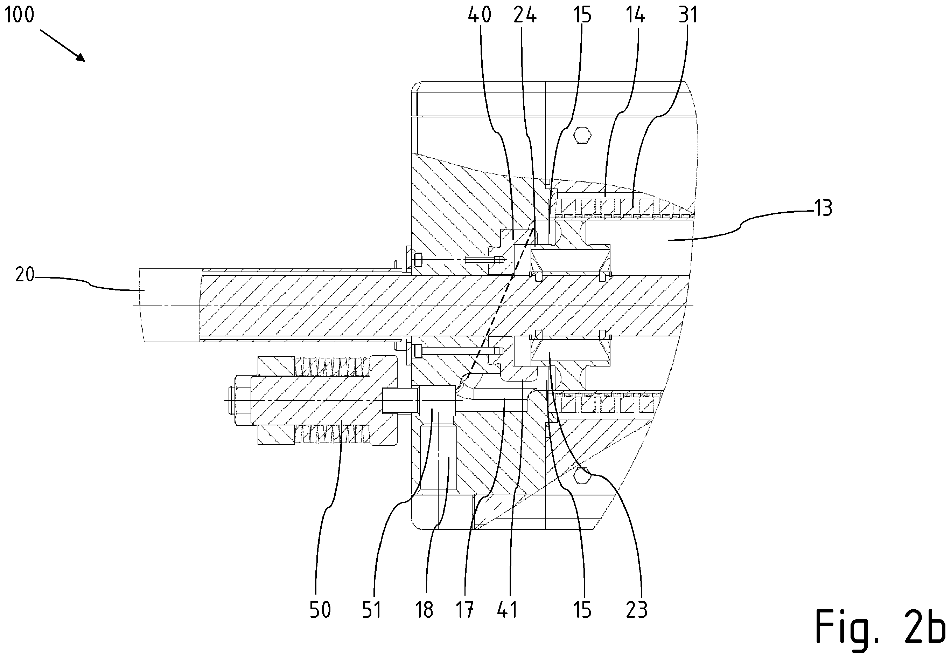

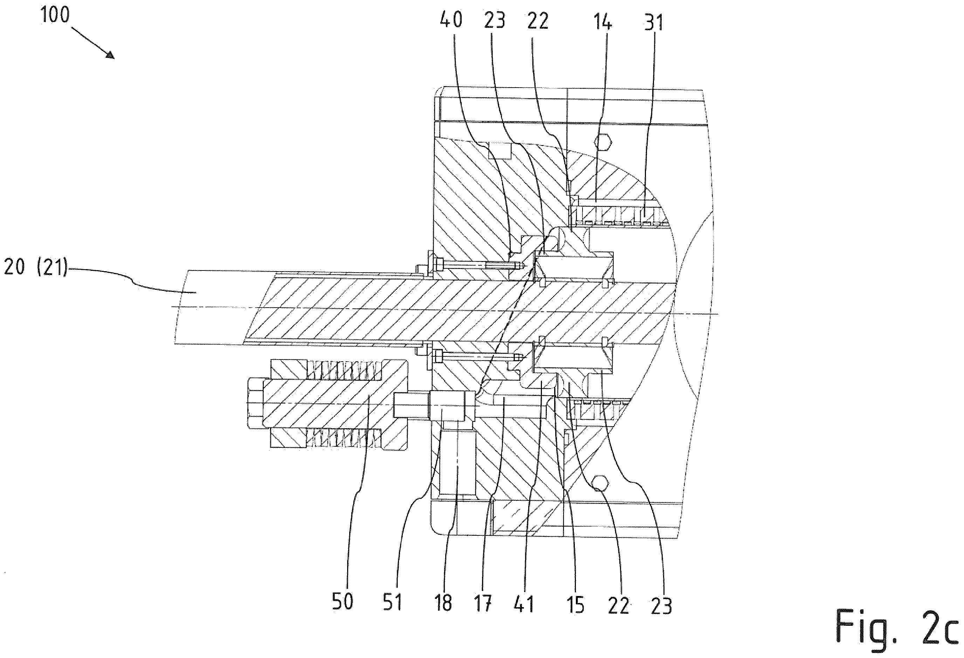

Die Darstellung in Figur 2a und den folgenden Figuren 2b und 2c liegt jeweils in einer um 90° gegenüber Figur 1 gedrehten Zeichenebene. Dadurch sind der Zuflusskanal 11 und der Ablaufkanal 12 nicht mehr sichtbar, jedoch werden in dieser Schnittebene wesentliche Teile einer Ringkammer 15 und des sich anschließenden Schmutzablasskanals 17, 18 erfasst.

Hinter der Ringkammer 15 liegt ein erster Teil eines Schmutzablasskanals 17, der zu einem Ventilelement 51 und einem dahinterliegenden zweiten Teil eines Schmutzablasskanals 18 führt. Der erste Abschnitt des Schmutzablasskanals 17 hat nicht überall die gleiche Tiefe, sondern verläuft zunächst oben flach und dann, wie durch die gestrichelten Linien angedeutet, zum zweiten Abschnitt des Schmutzablaufkanals 18 hin zunehmend in der Tiefe des Gehäuses 10. Durch die Schrägstellung in der rückwärtigen Begrenzung des einen Abschnitts des Schmutzablasskanals 17 wird die Fließrichtung umgelenkt, so dass sie auf den anderen Abschnitt des Schmutzablasskanals 18 hin gerichtet ist.

Der Schmutzablasskanal 17, 18 ist über ein Ventilelement 51 verschlossen. Bei dem dargestellten Ausführungsbeispiel handelt es sich um ein selbsttätiges Ventil 50, das durch ein Federpaket vorgespannt ist. Die Vorspannung reicht aus, um gegenüber dem normalen Druck im Fluid während des Produktionsbetriebs gemäß Figur 1 einen sicheren Verschluss des Schmutzablaufkanals 17, 18 zu erreichen. Erst durch den mechanisch oder hydraulisch unterstützten, axialen Hub des Abstreiferelements 20 in die Endstellung erfolgt in der Ringkammer 15 eine starke Druckerhöhung, die zur Öffnung des Ventilelements 51 und zum Auspressen verschmutzter Masse führt.

Bei der Stellung des Abstreiferelements 20 gemäß Figur 2a ist die vordere Kante 24 am Absatz 23 soeben in eine Aufnahmeausnehmung 42 im Ringbereich 41 am Deckelelement 40 eingetaucht. Damit sperrt das Abstreiferelement 20 den Aufnahmeraum 13 ab, da es nur innerhalb des Umfangs der Aufnahmeausnehmung 42 bzw. des Absatzes 23 axial durchströmbar ist. Es ergibt sich ein gegenüber dem Aufnahmeraum 13 abgeschlossener Ringkanal 16.

Bei der Stellung des Abstreiferelements 20 gemäß Figur 2b ist über einen weitergehenden axialen Hub der Absatz 23 weiter in die Aufnahmeausnehmung 42 am Deckelelement 40 eingetaucht. Zugleich wird das Volumen in der Ringkammer 15 komprimiert, und die dort vorhandene Masse wird über den vorderen Schmutzablasskanal 17 in Richtung des Ventilelements 51 und schließlich in den hinteren Schmutzablasskanal 18 abgeschoben.

Bei der Stellung des Abstreiferelements 20 gemäß Figur 2c wurde dessen axiale Endstellung erreicht. Der Absatz 23 liegt nun vollständig innerhalb der Aufnahmeausnehmung 42 im Deckelelement 40. Das Volumen der Ringkammer 15 ist auf eine minimale Größe reduziert.

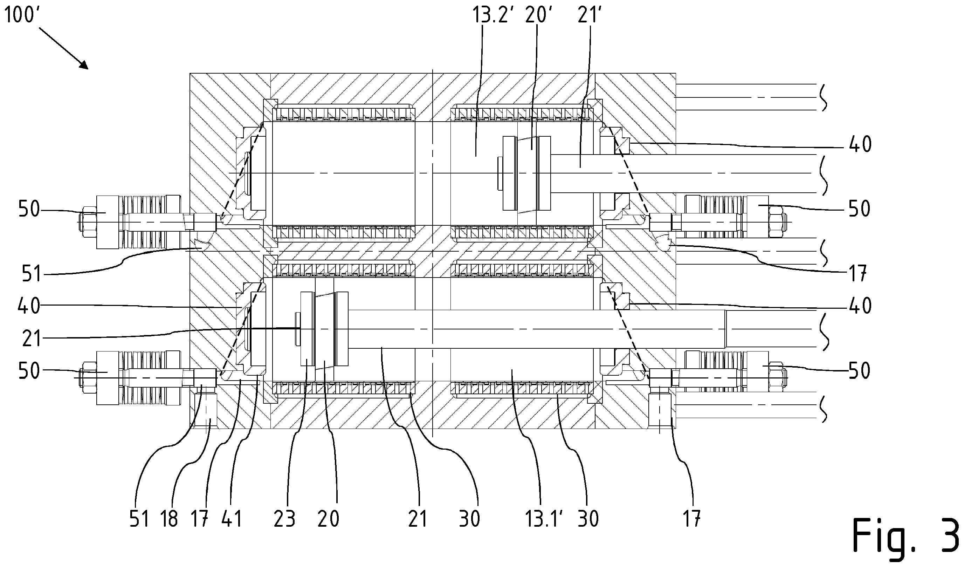

Figur 3 zeigt in gleicher Schnittebene wie bei den Figuren 2a bis 2c eine zweite Ausführungsform einer erfindungsgemäßen ausgebildeten Grobpartikelabscheidevorrichtung 100'. Gegenüber der ersten Ausführungsform gleiche Teile sind hierin mit gleichen Bezugszahlen bezeichnet.

Unterschiedlich bei der zweiten Ausführungsform ist zum einen, dass in dem Gehäuse zwei Aufnahmeräume 13.1', 13.2'übereinander ausgebildet sind, so dass insgesamt vier Stirnseiten mit Deckelelementen 40, Ventilelementen 50, 51 und Schmutzablasskanälen 17, 18 vorgesehen sind.

Zum anderen besteht ein Unterschied darin, dass die Abstreiferelemente 20' jeweils am Ende einer Kolbenstange 21' angeordnet sind, welche nur einseitig, nämlich jeweils in dem in Figur 3 rechten Teil des Gehäuses 10', gelagert sind.

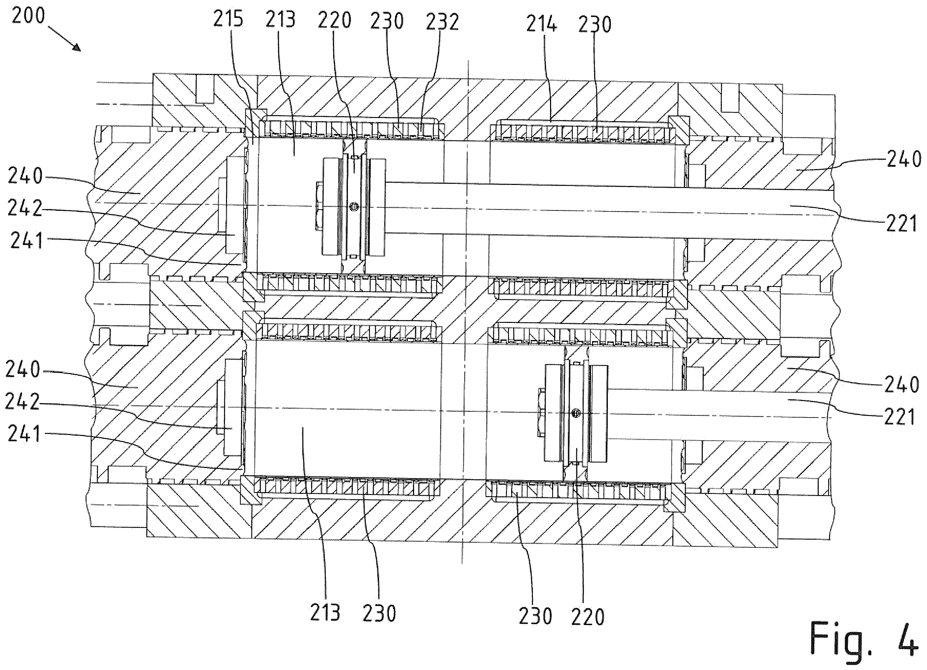

Figur 4 zeigt eine dritte Ausführungsform einer Grobpartikelabscheidevorrichtung 200. Diese umfasst ein Gehäuse 210, das aus mehreren, hier nicht näher beschriebenen Einzelteilen zusammengesetzt ist. In einem Mittelteil sind zwei Aufnahmeräume 213 ausgebildet, in welchen jeweils zwei Filtertrommeln 230 eingesetzt sind. Ein nicht dargestellter Zulaufkanal mündet in dem Aufnahmeraum 213. Die Filtertrommel 230 besitzt an ihrem Mantel jeweils eine Vielzahl von Filteröffnungen 232, durch welche das Fluid in einen Außenraum 214 fließen kann, welcher die Filtertrommel 230 jeweils umgibt. Der Außenraum 214 steht mit einem nicht dargestellten Ablaufkanal in Verbindung, durch welchen das Fluid aus dem Gehäuse 210 heraus abfließen kann.

Zur linken Stirnseite des Aufnahmeraums 213 hin enden diejenigen Bereiche im Mantel der Filtertrommel 230, die mit Filteröffnungen 232 versehen sind. Der Mantel der Filtertrommel 230 geht dort vielmehr übergangslos in einen Absatz im Gehäuse 210 über.

Ein Abstreiferelement 220 ist an einer Kolbenstange 221 befestigt, welche im rechten Teil des Gehäuses 210 axial verschiebbar gelagert ist. Das Abstreiferelement 220 besitzt in der Mitte einen Absatz mit einer Abstreiferklinge 222, die sich bis an die Innenseite der Filtertrommel 231 erstreckt. Beidseits davon springt jeweils ein Absatz 223 vor. Das Abstreiferelement 220 besitzt mehrere axiale Durchbrüche, um das Fluid bei einer alternierenden Reinigungsbewegung von dem rechten in den linken Teil des Aufnahmeraums 213 und wieder zurück ungehindert passieren lassen zu können.

An der Stirnseite des Aufnahmeraums 213 ist im Zentrum, durch das die Mittelachse führt, ein Deckelelement 240 angeordnet, das einen Ringbereich 241 besitzt, der zum Aufnahmeraum 213 weist. Innerhalb des Ringbereichs 241 ist eine Aufnahmeausnehmung 242 vorgesehen, die der Aufnahme des Absatzes 223 des Abstreiferelements 220 dient.

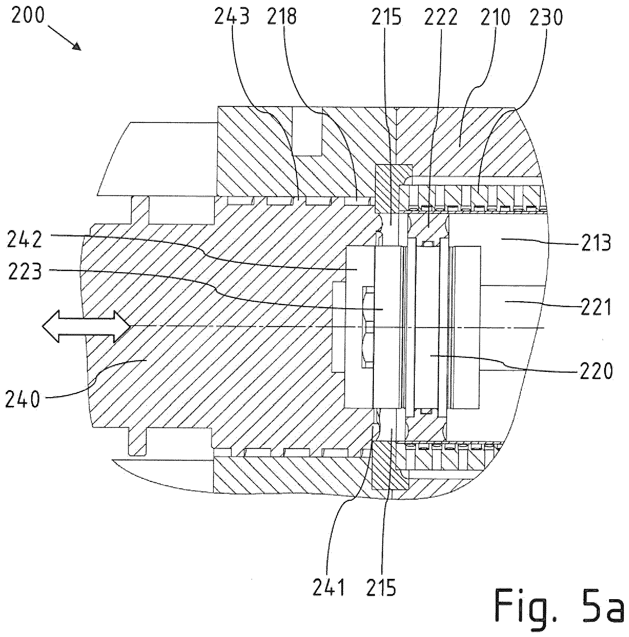

Das Deckelelement 240 ist bei dieser Ausführungsform einer Grobpartikelabscheidevorrichtung 200 verschiebbar gelagert. Es kann mittels des Abstreiferelements 220 aus seinem am Gehäuse 210 anliegenden Sitz aus der Ausgangsstellung gemäß Figur 5a ausgerückt werden und wird dann später durch die Kraft eines Federpakets oder eines Aktorelements wie eines Hydraulikzylinders in die Ausgangslage zurückbewegt.

Taucht im Reinigungsprozess der Absatz 223 des Abstreiferelements 220 in die Aufnahmeausnehmung 242 im Deckelelement 240 ein, wie in Figur 5a gezeigt, so kann das Fluid in der Aufnahmeausnehmung 242 zunächst noch über wenigstens eine Bohrung im Abstreiferelement 220 von der Aufnahmeausnehmung 242 in den Aufnahmeraum 213 entweichen.

Zugleich dichtet der Absatz 223 außen gegenüber dem inneren Rand des Ringbereiches 241 ab. Damit bildet sich zwischen dem Absatz 223, dem Gehäuse 210, der Abstreiferklinge 222 und dem Ringbereich 241 eine geschlossene Ringkammer 215 aus. Je weiter das Abstreiferelement 220 auf das Deckelelement 240 zu bewegt wird, desto mehr wird die Ringkammer 215 verkleinert. Schmutz, der durch die Abstreiferklinge 222 abgeschabt worden ist und in diesen Bereich geschoben worden ist, wird komprimiert und in einen mit der Ringkammer 215 in Verbindung stehenden Schmutzablasskanal 218 gedrückt. Der Schmutzablasskanal 218 ist in den Gängen eines wendelförmigen Schneckengewindes 243 am Außenumfang des Deckelelements 240 gebildet.

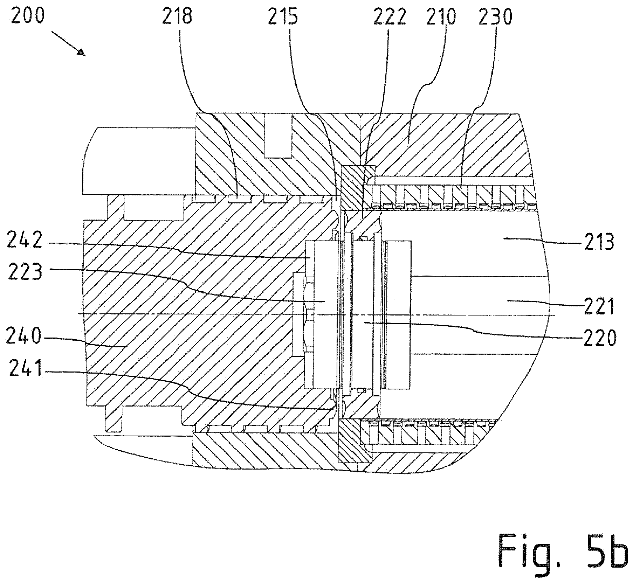

In Figur 5b ist das Deckelelement 240 gegenüber der Stellung in Figur 5a zurückgeschoben worden. Ein zur Anlage an einer Kante im Gehäuse 210 bestimmter Dichtsitz 244 außen am Ringbereich 241 liegt frei. Zwischen dem Ringbereich 241 und dem Abstreiferelement 220 ist ein Abstand erkennbar. Dieser entsteht durch die dazwischen befindlichen, nicht gezeichneten Schmutzpartikel.

Das Deckelement 240 ist bei dieser Ausführungsform der Grobpartikelabscheidevorrichtung 200 nicht nur axial verschiebbar, sondern auch rotierbar. Durch Rotation des Deckelelements 240 kann das in der Ringkammer 215 komprimierte Schmutzgemisch in den als Schmutzablasskanal 218 dienenden Gängen der Schneckenwendel 243 zur Gehäuseaußenseite gefördert werden.

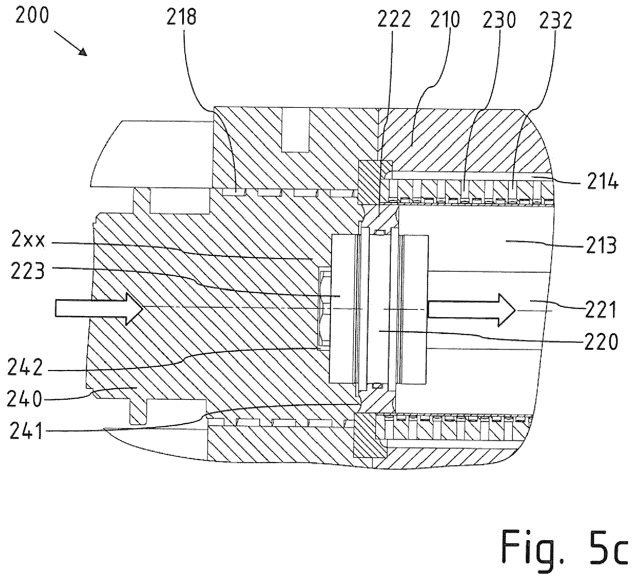

Mit der Abförderung wird die Ringkammer 215 wieder frei, und das Deckelement 240 kann mit seinem Dichtsitz 244 wieder zurück in die Ausgangslage am Gehäuse 210 gemäß Figur 5c geschoben werden. Das Abstreiferelement 220 führt eine Rückzugsbewegung durch, bei der ebenfalls Schmutz von der Innenseite der Filtertrommel 230 abgeschabt wird. Dieser wird zur gegenüberliegenden Seite im Gehäuse 210 gefördert, wo eine nahezu gleichartige Ausbildung des Deckelelements 240 vorgesehen ist, wie aus Figur 4 erkennbar. Der einzige Unterscheid des Deckelelements 240 an der rechten Seite des Gehäuses 210 liegt darin, dass die Kolbenstange 221 des Abstreiferelements 220 durch das Deckelelement 240 hindurch geführt ist.

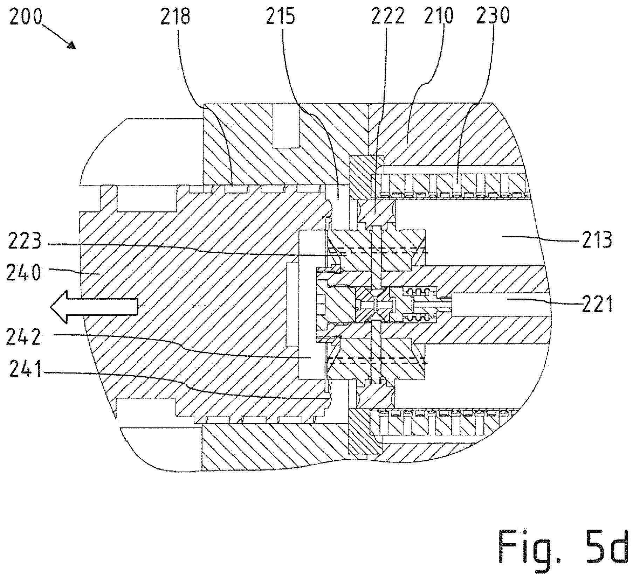

Figur 5d zeigt eine alternative Spülstellung des Abstreiferelements 220 und des Deckelelements 240. Dabei ist das Abstreiferelement 220 axial so positioniert, dass es mit seiner Abstreiferklinge 222 jenseits der Durchbrüche 232 in der Filtertrommel 230 liegt. Zwischen Abstreiferklinge 222 und Gehäuse 210 besteht damit eine Abdichtung. Zugleich ist das Deckelement 240 soweit von dem Abstreiferelement 220 über Antriebe weggerückt worden, dass die Abdichtung an der inneren Dichtzone, zwischen dem Absatz 223 und dem Rand der Aufnahmeausnehmung 242, aufgehoben ist. Über die durch die gestrichelten Linien angedeuteten axialen Fließkanäle im Abstreiferelement 220 kann Schmelze aus dem Aufnahmeraum 213 in den Bereich der Aufnahmeausnehmung 241 fließen, von dort weiter in die Ringkammer 215 und darüber schließlich in den Schmutzablasskanal 218. Während die groben Schmutzpartikel also am Außenumfang des Abstreiferelements 220 und am Innenumfang der Filtertrommel 230 zurück gehalten werden, kann weitgehend unkontaminierte Schmelze aus dem Inneren des Aufnahmeraums in der beschriebenen Weise abfließen, so dass etwaiger in der Ringkammer 215 und dem Schmutzablasskanal 218 vorhandener Schmutz ausgeschwemmt werden kann.

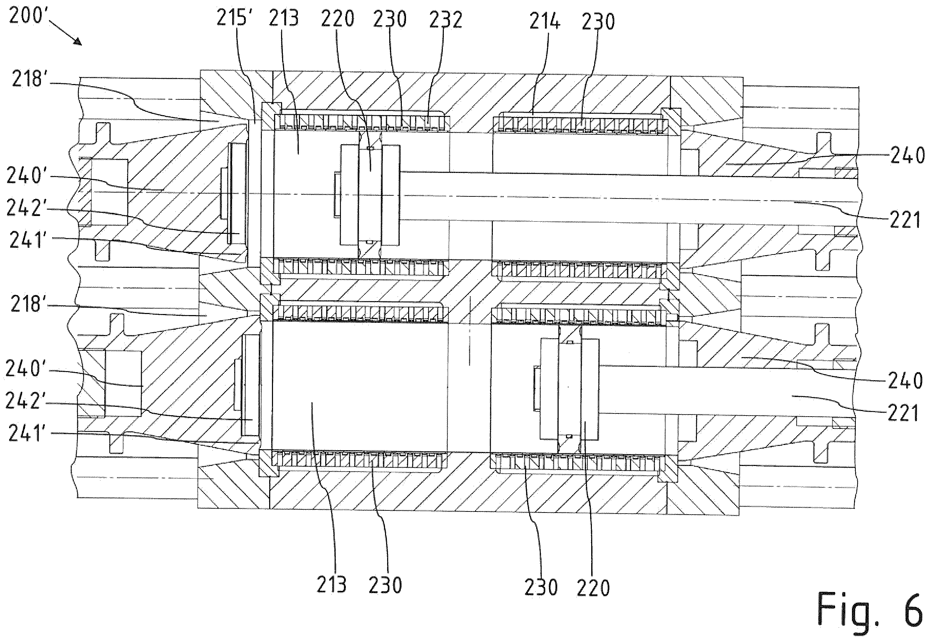

Figur 6 zeigt eine vierte Ausführungsform einer Grobpartikelabscheidevorrichtung 200'. Diese ist von Funktion und Aufbau weitgehend gleich zu der in den Figuren 4 und 5a bis 5d dargestellten dritten Ausführungsform. Der Unterscheid hierzu liegt in der Ausbildung eines Deckelements 240'. Dies ist nach außen konisch zulaufend gestaltet, so dass sich der als Schmutzablasskanal 218 dienende Spalt gegenüber dem Gehäuse 210 kontinuierlich erweitert

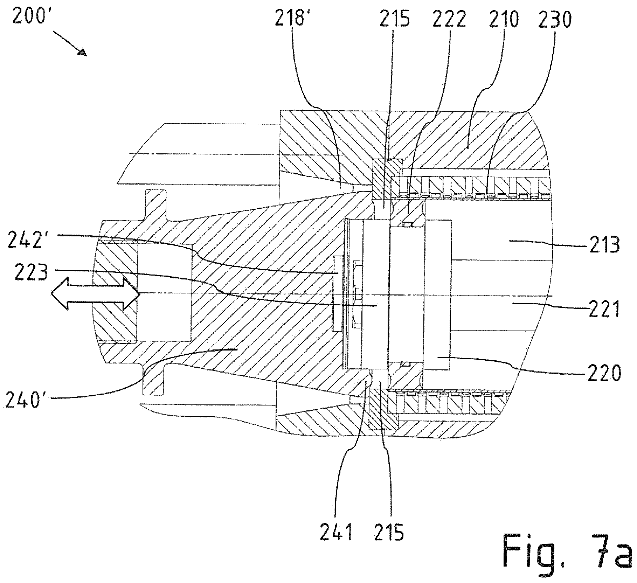

Figur 7a zeigt einen Ausschnitt der Grobpartikelabscheidevorrichtung 200', wobei das Abstreiferelement 220 in eine Aufnahmeausnehmung 242' im Deckelelement 240' eintaucht. Der Absatz 223 dichtet außen gegenüber dem inneren Rand der eine Aufnahmeausnehmung 242' ab. Damit bildet sich zwischen dem Absatz 223, dem Gehäuse 210, der Abstreiferklinge 222 und dem Ringbereich 241' eine geschlossene Ringkammer 215 aus. Je weiter das Abstreiferelement 220 auf das Deckelelement 240' zu bewegt wird, desto mehr wird die Ringkammer 215 verkleinert. Schmutz, der durch die Abstreiferklinge 222 abgeschabt worden ist und in diesen Bereich geschoben worden ist, wird in der Ringkammer 215 komprimiert.

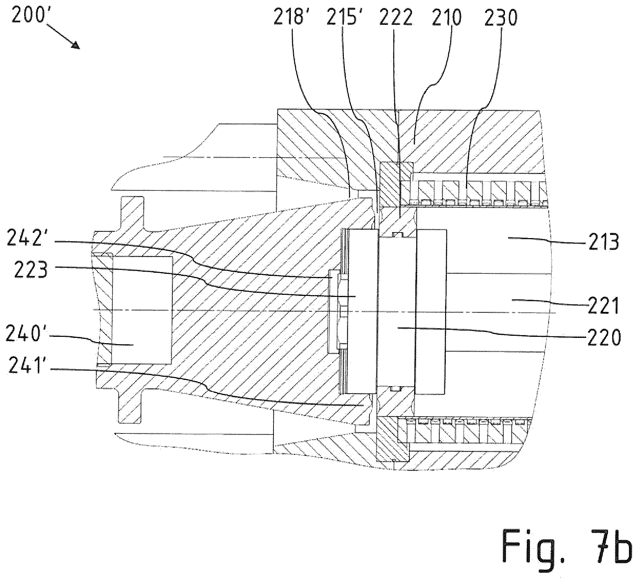

Liegt der Absatz 223 am Deckelelement 240' an, so führt der weitere Axialhub des Abstreiferelements 220 dazu, dass das Deckelelement 240'aus seinem Dichtsitz ausgerückt wird und eine Öffnung zur Gehäuseaußenseite geschaffen wird, wie in Figur 7b gezeigt. Der offene Spalt zwischen dem Gehäuse 210' und dem Deckelelement 240' dient als Schmutzablasskanal 218', aus dem das verschmutzte Material abfließen kann oder herausgedrückt werden kann. Anschließend wird das Deckelelement 240' wieder über Federn oder über einen Hydraulikzylinder zurück in die Ausgangsstellung gedrückt. Das Deckelelement 240' dichtet dann wieder am Gehäuse 210' ab. Das Abstreiferelement 220 wird zurückgezogen und fördert weiteren anhaftenden Schmutz zu einem an der gegenüberliegenden Seite liegenden Deckelelement 240', wo sich der beschriebene Vorgang wiederholt.

## Patentansprüche

1. Grobpartikelabscheidevorrichtung (100; 100'; 200; 200') für hochviskose Fluide, wenigstens umfassend:
- ein Gehäuse (10; 10'; 210) mit wenigstens einem Zulaufkanal (11) und wenigstens einem Ablaufkanal (12) und wenigstens einem inneren Aufnahmeraum (13; 13.1', 13.2'; 213),
- wenigstens eine Filtertrommel (30; 230), die an ihrem Mantel (31) mehrere Filteröffnungen (32; 232) aufweist und die innerhalb des wenigstens einen Aufnahmeraums (13; 13.1', 13.2'; 213) im Gehäuse (10; 10'; 210) angeordnet ist,
- wenigstens ein Abstreiferelement (20; 20'; 220), das axial verschiebbar innerhalb der Filtertrommel (30; 230) angeordnet ist und das mit wenigstens einer Abstreiferklinge (22; 222) über die Filteröffnungen (32; 232) an der Innenseite der Filtertrommel (30; 230) geführt ist,
**dadurch gekennzeichnet, dass** an einem Endbereich der Filtertrommel (30; 230) oder an einer Stirnseite des Aufnahmeraums (13; 13.1', 13.2'; 213) im Gehäuse (10; 10'; 210) ein Deckelelement (40; 240; 240') angeordnet ist, das eine innere Dichtzone besitzt, die von einem Ringbereich (41; 241; 241') umgeben ist und die mit einer inneren Dichtzone am Abstreiferelement (20; 20'; 220) koppelbar ist;
- und dass das Abstreiferelement (20; 20'; 220) bis über die Filteröffnungen (32; 232) in der Filtertrommel (30; 230) hinaus in eine axiale Endstellung verschiebbar ist, in welcher Endstellung zwischen
- a) der Abstreiferklinge (22; 222) und der Innenwandung der Filtertrommel (30; 230) bzw. dem Innenumfang des inneren Aufnahmeraums (13; 13.1', 13.2'; 213) sowie
- b) zwischen den inneren Dichtzonen am Deckelelement (40; 240; 240') und am Abstreiferelement (20; 20'; 220)
eine Abdichtung einer äußeren Ringkammer (15; 215) hergestellt und diese vom übrigen Teil des Aufnahmeraums abgetrennt wird, wobei von der äußeren Ringkammer (15; 215) wenigstens ein Schmutzablasskanal (18 ; 218) zur Außenseite des Gehäuses (10, 210) führt.

2. Grobpartikelabscheidevorrichtung (100; 100') nach Anspruch 1, **dadurch gekennzeichnet, dass** der Schmutzablasskanal (17, 18) über ein Ventil (50, 51) verschließbar ist;

3. Grobpartikelabscheidevorrichtung (100; 100'; 200; 200') nach Anspruch 1 oder 2, **dadurch gekennzeichnet, dass** die innere Dichtzone durch eine von dem Ringbereich (41; 241; 241') umgebene Aufnahmeausnehmung (42; 242; 242') in dem Deckelelement (40; 240; 240') oder in dem Gehäuse (10) ausgebildet ist, in die ein am Abstreiferelement (20; 20'; 220) vorspringender Absatz (23; 223) einschiebbar ist.

4. Grobpartikelabscheidevorrichtung (200; 200') nach einem der Ansprüche 1 bis 3, **dadurch gekennzeichnet, dass** das Deckelelement (240; 240') axial verschiebbar gelagert ist.

5. Grobpartikelabscheidevorrichtung (200) nach Anspruch 3 oder 4, **dadurch gekennzeichnet, dass** das Deckelelement (240) an seinem Außenumfang einen schneckenwendelförmigen Schmutzablasskanal (218) aufweist und dass das Deckelelement (240) gegenüber dem Gehäuse (210) rotierbar ist.

6. Grobpartikelabscheidevorrichtung (200') nach einem der Ansprüche 1 bis 5, **dadurch gekennzeichnet, dass** sich der Außenumfang des Deckelelements (240') zur Gehäuseaußenseite hin verjüngt.

7. Grobpartikelabscheidevorrichtung (100; 100'; 200; 200') nach wenigstens einem der vorhergehenden Ansprüche, **dadurch gekennzeichnet, dass** in dem Aufnahmeraum (13; 13.1', 13.2'; 213) jeweils zwei Filtertrommeln (30; 230) axial fluchtend hintereinander angeordnet sind.

8. Grobpartikelabscheidevorrichtung (100; 100'; 200; 200') nach Anspruch 7, **dadurch gekennzeichnet, dass** ein gemeinsames Abstreiferelement (20; 20'; 220) für beide Filtertrommeln (30; 230) vorgesehen ist.

9. Grobpartikelabscheidevorrichtung (100) nach wenigstens einem der Ansprüche 1 bis 8, **dadurch gekennzeichnet, dass** das Abstreiferelement (20) an einer Kolbenstange (21) angebracht ist, welche an beiden Stirnseiten des Aufnahmeraums (13) bzw. in den sich im Gehäuse (10) gegenüberliegenden Deckelelementen (40) gelagert ist.

10. Grobpartikelabscheidevorrichtung (100; 100'; 200; 200') nach wenigstens einem der Ansprüche 1 bis 9, **dadurch gekennzeichnet, dass** das Abstreiferelement (20; 20'; 220) an seiner anderen Stirnseite einen zweiten vorspringenden Absatz (23; 223) aufweist und dass an der gegenüberliegenden, zweiten Stirnseite der Filtertrommel (30; 230) und/oder an der anderen Stirnseite des innerhalb der Filtertrommel (30; 230) gelegenen Teils des Aufnahmeraums (13; 13.1', 13.2'; 213) eine weitere Ringkammer (15; 215) auszubilden ist.

## Claims

1. A coarse particle separator (100; 100') for highly viscous fluids, comprising at the least:
- a housing (10; 10'; 210) having at least one inlet channel (11) and at least one outlet channel (12) and at least one inner receiving space (13; 13.1', 13.2'; 213),
- at least one filter drum (30; 230) which has a plurality of filter openings (32; 232) on its outer casing (31) and which is disposed inside the at least one receiving space (13; 13.1', 13.2'; 213) in the housing (10; 10'; 210),
- at least one scraper element (20; 20'; 220) arranged axially displaceably inside the filter drum (30; 230) and guided with at least one scraper blade (22; 222) over the filter openings (32; 232) on the inner side of the filter drum (30; 230),
**characterized in that**
a cover element having an inner sealing zone which is surrounded by an annular portion (41; 241; 241') and which can be coupled with an inner sealing zone on the scraper element (20; 20'; 220) is provided on an end region of the filter drum (30; 230) or on an end face of the receiving space (13; 13.1', 13.2'; 213) in the housing (10; 10'; 210);
- and **in that** the scraper element (20; 20'; 220) can be moved over and beyond the filter openings (32; 232) in the filter drum (30; 230) into an axial end position, in which a seal for an outer annular chamber (15; 215) is produced between
- a) the scraper blade (22; 222) and the inner wall of the filter drum (30; 230) and/or the inner circumference of the inner receiving space (13; 13.1', 13.2'; 213) and
- b) between the inner sealing zones on the cover element (40; 240; 240') and on the scraper element (20; 20'; 220)
and said outer annular chamber (15; 215) is separated from the rest of the receiving space,
wherein at least one dirt discharge channel (18; 218) leads from the annular chamber (15; 215) to the outside of the housing (10, 210).

2. The coarse particle separator (100; 100') according to claim 1, **characterized in that** the dirt discharge channel (17, 18) can be closed by a valve (50, 51).

3. The coarse particle separator (100; 100'; 200; 200') according to claim 1 or 2, **characterized in that** the inner sealing zone is formed by a receiving recess (42; 242; 242') which is surrounded by the annular portion (41; 241; 241') and provided in the cover element (40; 240; 240') or in the housing (10) and into which a projecting shoulder (23; 223) on the scraper element (20; 20'; 220) can be inserted.

4. The coarse particle separator (200; 200') according to any one of claims 1 to 3, **characterized in that** the cover element (240; 240') is mounted axially displaceably.

5. The coarse particle separator (200) according to claim 3, **characterized in that** the cover element (240) has a helical dirt discharge channel (218) on its outer circumference and that the cover element (240) is rotatable relative to the housing (210).

6. The coarse particle separator (200') according to any one of claims 1 to 5, **characterized in that** the outer circumference of the cover element (240') tapers towards the outer side of the housing.

7. The device for separating coarse particles (100; 100'; 200; 200') according to at least one of the preceding claims, **characterized in that** two filter drums (30; 230) are arranged axially aligned one behind the other inside the receiving space (13; 13.1', 13.2'; 213).

8. The coarse particle separator (100; 100'; 200; 200') according to claim 7, **characterized in that** a shared scraper element (20; 20'; 220) is provided for both filter drums (30; 230).

9. The coarse particle separator (100) according to at least one of claims 1 to 8, **characterized in that** the scraper element (20) is attached to a piston rod (21) which is mounted at both end faces of the receiving space (13) and in the opposite cover elements (40) inside the housing (10).

10. The coarse particle separator (100; 100'; 200; 200') according to at least one of claims 1 to 9, **characterized in that** the scraper element (20; 20'; 220) has a second projecting shoulder (23; 223) on its other end face and that another annular chamber (15; 215) is formed on the opposite, second end face of the filter drum (30; 230) and/or on the other end face of that part of the receiving space (13; 13.1', 13.2'; 213) which lies inside the filter drum (30; 230).

## Revendications

1. Dispositif de séparation de particules grossières (100 ; 100' ; 200 ; 200') pour des fluides à viscosité élevée, comprenant au moins :
un boîtier (10 ; 10' ; 210) avec au moins un canal d'alimentation (11) et au moins un canal d'évacuation (12) et au moins un espace de réception intérieur (13 ; 13.1', 13.2' ; 213),
au moins un tambour filtrant (30 ; 230) qui présente plusieurs ouvertures de filtration (32 ; 232) au niveau de son enveloppe (31) et qui est agencé à l'intérieur de l'au moins un espace de réception (13 ; 13.1', 13.2' ; 213) dans le boitier (10 ; 10' ; 210),
au moins un élément racleur (20 ; 20' ; 220) qui est agencé de manière mobile axialement à l'intérieur du tambour filtrant (30 ; 230) et qui est guidé avec au moins une lame de racleur (22 ; 222) via les ouvertures de filtration (32 ; 232) au niveau du côté intérieur du tambour filtrant (30 ; 230),
**caractérisé en ce que**
au niveau d'une zone d'extrémité du tambour filtrant (30 ; 230) ou d'un côté frontal de l'espace de réception (13 ; 13.1', 13.2' ; 213) dans le boitier (10 ; 10' ; 210) est agencé un élément de couvercle (40 ; 240 ; 240') qui possède une zone d'étanchéité intérieure qui est entourée par une zone annulaire (41 ; 241 ; 241') et qui peut être couplée avec une zone d'étanchéité intérieure au niveau de l'élément racleur (20 ; 20' ; 220) ;
et **en ce que** l'élément racleur (20 ; 20' ; 220) est mobile jusqu'au-delà des ouvertures de filtration (32 ; 232) dans le tambour filtrant (30 ; 230) dans une position finale axiale, dans laquelle position finale entre
a) la lame de racleur (22 ; 222) et la paroi intérieure du tambour filtrant (30 ; 230) ou la périphérie intérieure de l'espace de réception intérieur (13 ; 13.1', 13.2' ; 213) ainsi que
b) entre les zones d'étanchéité intérieures au niveau de l'élément de couvercle (40 ; 240 ; 240') et de l'élément racleur (20 ; 20' ; 220), un joint d'une chambre annulaire extérieure (15 ; 215) est créé et celui-ci est séparé de la partie restante de l'espace de réception,
au moins un canal de vidange de saleté (18 ; 218) menant depuis la chambre annulaire extérieure (15 ; 215) vers le côté extérieur du boitier (10 ; 210).

2. Dispositif de séparation de particules grossières (100 ; 100') selon la revendication 1, **caractérisé en ce que** le canal de vidange de saleté (17, 18) peut être fermé via une soupape (50, 51).

3. Dispositif de séparation de particules grossières (100 ; 100' ; 200 ; 200') selon la revendication 1 ou 2, **caractérisé en ce que** la zone d'étanchéité intérieure est formée par un évidement de réception (42 ; 242 ; 242') entouré par la zone annulaire (41 ; 241 ; 241') dans l'élément de couvercle (40 ; 240 ; 240') ou dans le boîtier (10), dans lequel peut être inséré un épaulement (23 ; 223) en saillie au niveau de l'élément racleur (20 ; 20' ; 220).

4. Dispositif de séparation de particules grossières (200 ; 200') selon l'une quelconque des revendications 1 à 3, **caractérisé en ce que** l'élément de couvercle (240 ; 240') est monté de manière mobile axialement.

5. Dispositif de séparation de particules grossières (200) selon la revendication 3 ou 4, **caractérisé en ce que** l'élément de couvercle (240) présente, au niveau de sa périphérie extérieure, un canal de vidange de saleté (218) en forme de spirale et **en ce que** l'élément de couvercle (240) est rotatif par rapport au boîtier (210).

6. Dispositif de séparation de particules grossières (200') selon l'une quelconque des revendications 1 à 5, **caractérisé en ce que** la périphérie extérieure de l'élément de couvercle (240') se rétrécit vers le côté extérieur de boîtier.

7. Dispositif de séparation de particules grossières (100 ; 100' ; 200 ; 200') selon au moins l'une quelconque des revendications précédentes, **caractérisé en ce que**, dans l'espace de réception (13 ; 13.1', 13.2' ; 213), deux tambours filtrants (30 ; 230) sont respectivement agencés l'un derrière l'autre en alignement axial.

8. Dispositif de séparation de particules grossières (100 ; 100' ; 200 ; 200') selon la revendication 7, **caractérisé en ce qu'**est prévu un élément racleur (20 ; 20' ; 220) commun pour les deux tambours filtrants (30 ; 230).

9. Dispositif de séparation de particules grossières (100) selon au moins l'une quelconque des revendications 1 à 8, **caractérisé en ce que** l'élément racleur (20) est placé au niveau d'une tige de piston (21), laquelle est montée au niveau des deux côtés frontaux de l'espace de réception (13) ou dans les éléments de couvercle (40) se faisant face dans le boitier (10).

10. Dispositif de séparation de particules grossières (100 ; 100' ; 200 ; 200') selon au moins l'une quelconque des revendications 1 à 9, **caractérisé en ce que** l'élément racleur (20 ; 20' ; 220) présente un second épaulement (23 ; 223) en saillie au niveau de son autre côté frontal et **en ce qu'**une autre chambre annulaire (15 ; 215) doit être formée au niveau du second côté frontal opposé du tambour filtrant (30 ; 230) et/ou au niveau de l'autre côté frontal de la partie de l'espace de réception (13 ; 13.1', 13.2' ; 213) située à l'intérieur du tambour filtrant (30 ; 230).
